# EUROPEAN PATENT APPLICATION

(11) **EP 4 796 776 A1**
(43) Date of publication of application: **26.08.2026**
(21) Application number: 25305239.3
(22) Date of filing: 21.02.2025
(51) Int. Cl.: F02K 9/42, B64G 1/40, F02K 9/44, F02K 9/46, F02K 9/48, F02K 9/50

(54) **PROPULSION SYSTEM AND SPACECRAFT**

(71) Applicant: ArianeGroup GmbH, 82024 Taufkirchen (DE); ArianeGroup SAS, 78130 Les Mureaux (FR)
(72) Inventor: HESSEL, Christian, 28199 Bremen (DE); SOUVEREIN, Louis, 82024 Taufkirchen (DE); LEMERCIER, Nicolas, 78131 Les Mureaux Cedex (FR)
(74) Representative: Marschall, Stefan

(57) **Abstract**

Disclosed is a spacecraft propulsion system comprising a propellant tank (11, 12), a main engine (50), an evaporator unit (27, 28), and a boost pump (13, 14). The main engine (50) comprises a thrust chamber (1), a nozzle (2), and a powerpack including a main turbopump unit (MTP, MTP_{F}, MTP_{O}). The evaporator unit (27, 28) is configured to vaporise liquid propellant (7, 8) to be supplied to a reaction control system (RCS, 101, 102, 103, 104) of the spacecraft. The boost pump (13, 14) is configured to feed both the main turbopump unit (MTP, 3, 4) and the evaporator unit (27, 28) with propellant (7, 8) originating from the propellant tank (11, 12). Preferably, the boost pump is configured to be driven with energy transmitted, from a turbine (17, 18) integrated in an autogenous tank pressurisation system. Further disclosed is a spacecraft comprising such propulsion system.

## Description

The present invention concerns a propulsion system of or for a spacecraft. The invention further concerns a spacecraft comprising such propulsion system.

Liquid-propellant spacecrafts typically comprise a propulsion system which is operated with a fuel and an oxidiser as liquid chemical components. Fuel and oxidiser, for example cryogenic hydrogen and cryogenic oxygen, are carried in respective tanks and supplied, by main turbopumps, to an engine of the spacecraft. The tanks may conventionally be pressurised using an inert gas system. For example, helium gas may be carried under high pressure and used to repressurize the tanks. Alternatively, so-called autogenous pressurisation systems may be employed which utilise the respective propellant itself for pressurising the respective tank.

One of the main constraints in the design of turbopumps included in such propulsion system resides in the required suction pressure at the pump inlet to avoid cavitation. Reducing the inlet pressure is advantageous from a stage point of view, minimizing tank pressure and hence mass. On the other hand, from a turbopump point of view, cavitation imposes a constraint on the maximum achievable rotation speed. A higher rotation speed is desirable to increase performance and to reduce mass.

Under nominal conditions, to avoid dynamic pressure fluctuations and a head-breakdown due to the increased vapor content, cavitation shall not occur. To meet this objective, most rocket engine turbopumps incorporate inducers: axial pumps which have good cavitation characteristics. Such inducers are mounted on the same shaft as the main impeller and hence have the same rotation rate, which however imposes limitations on the minimum required suction pressure. Further limitation of the suction capability of an inducer upstream the main pump may be caused by the feeding system which may have a certain feedline and equipment pressure drop characteristic between tank outlet and inducer inlet.

This is where an additional boost pump being a turbomachine integrated into the propulsion system upstream of the main turbopump provides further optimization potential. The main function of such boost pump is to increase the intake pressure (net positive suction pressure available, abbr. NPSP) of an associated main pump. It offers an increased flexibility for achieving a global mass and performance optimum from the propulsion system and stage point of view. A boost pump can be operated at a reduced rotational speed as compared to the main pump. This further decreases the required suction pressure, and by consequence also allows for a reduced tank pressure.

Typically, a boost pump may consist of an axial pump stage (similar to an inducer). It is hence more robust against vapour ingestion than a radial impeller due to the more gradual pressure rise. It provides a head rise that is sufficient to avoid cavitation in the main turbopump downstream.

Furthermore, a boost pump requires a drive unit to provide the shaft power. This can be in the form of a turbine, driven by a higher enthalpy medium that is either extracted from the cycle at another location in the propulsion system, or that is generated separately. Alternatively, the shaft power can be provided by an electric motor.

From US 5 873 241, a rocket engine auxiliary power system with boost pumps is known, wherein the boost pumps are driven with vaporised propellant from the engine cycle.

It is an object of the present invention to provide an improved propulsion system of or for a spacecraft, and to further provide an improved spacecraft.

The objects are achieved with a propulsion system according to claim 1, and with a spacecraft according to claim 12. Advantageous embodiments are disclosed in the dependent claims, the description, and the figures.

A propulsion system according to the present invention is integrated or at least configured/ designated to be integrated in a spacecraft. The spacecraft may, for example, be a multistage rocket, and/or it may be configured to be powered by exothermic reduction-oxidation chemical reactions of the propellant. In particular, the spacecraft may be a liquid-propellant rocket, for example.

The propulsion system comprises a main engine, a propellant tank, a an evaporator unit, and a boost pump.

The main engine (being a rocket engine and configured to generate - alone or in combination with one or various further main engine/s - the spacecraft's primary forward thrust) comprises a thrust chamber, a nozzle, and a powerpack including a main turbopumpo unit. The powerpack can optionally further include at least one further main turbopump unit and/or a gas generation device (such as a gas generator and/or a preburner).

The propellant tank is configured to contain a propellant, for example, a cryogenic propellant such as liquid hydrogen or liquid oxygen, cryogenic methane, or another propellant generally considered as fuel or oxidizer. In particular, the propellant tank may be configured as a pressure vessel.

The main turbopump unit (comprising a pump unit and a turbine unit configured to drive the pump unit) is configured (in particular, arranged) to supply the thrust chamber of the main engine with propellant originating from the propellant tank (i.e., having been stored therein before).

The evaporator unit of the propulsion system is configured (in particular, arranged) to convert liquid propellant originating from the propellant tank into gaseous propellant to be supplied to a reaction control system (also abbreviated herein as "RCS") of the spacecraft. Such reaction control system, which may form part of the propulsion system, may comprise one or various clusters each including one or several thrusters.

The boost pump of the propulsion system is configured to feed, at its pump side, each of the main turbopump unit and the evaporator unit (preferably independently from each other, in particular optionally simultaneously or successively) with propellant originating from the propellant tank. In particular, the boost pump may serve as a primary pump for feeding the reaction control system.

As is to be understood, the mentioned functionally defined configurations of the various and thereby interrelated components imply the presence of a suitable piping system to facilitate the respective supply/ transmission of the propellant. Even though thus only implicitly mentioned (for conciseness reasons), such piping system is to be considered as included in the propulsion system. The same holds analogously for further components mentioned below.

By virtue of the arranged double function of its boost pump, the propulsion system according to the present invention thus advantageously affiliates the propellant supply of the reaction control system to the propellant supply of the main engine. Thereby, a simplified, lightweight and space-saving general structure of the propulsion system (and therewith, of the spacecraft) can be achieved. In particular, an additional tank (and accessories thereof) dedicated to providing propellant for driving the reaction control system can be omitted.

According to advantageous embodiments, the propulsion system further comprises at least one reaction control thruster.

According to advantageous embodiments, the propulsion system further comprises an autogenous tank pressurisation system for pressurising the propellant tank with tap-off gas dispensed by the main engine, wherein the propulsion system is configured to propel a turbine unit at a drive side of the boost pump with energy captured from a flow of the tap-off gas.

In such embodiments, the propulsion system may preferably comprise at least one orifice, at least one valve, and/or at least one such turbine unit being arranged downstream the main turbopump unit (and referred to herein also as "downstream turbine unit"), the orifice, valve and/or downstream turbine unit configured to produce a pressure reduction in said flow of tap-off gas (also referred to herein as "mass flow for tank pressurization"). Indeed, a cycle branch downstream of the main turbopump unit and downstream of a (preferably included) regenerative cooling section of the thrust chamber or of a gas generator is typically under relatively high pressure and temperature, whereas the tank pressure has a lower pressure level which is similar to the pressure level of a main turbopump inlet or of a boost pump inlet. The orifice, valve and/or downstream turbine unit may provide a sufficient pressure reduction down to a minimum required tank pressure level.

Preferably, said orifice and/or valve and/or downstream turbine unit may be configured to provide for a predetermined minimum pressure; such predetermined minimum pressure may facilitate a particularly lightweight construction of the propellant tank, and it may prevent buckling under excessive loads in different phases of flight. On the other hand, a certain minimum inlet pressure for the boost pump may facilitate a high throttling rate of the boost pump during operation of the reaction control system in a coasting phase as detailed below. The propulsion system may be configured to arrange such minimum inlet pressure via a reactive mass flow and/or by regulating an operation of the boost pump to ultra-low feed mass flows.

By taking, in accordance with said embodiments, energy from the tap-off gas serving as a pressurant, pressure and temperature of the mass flow for tank pressurization may be decreased. The thus reduced temperature may advantageously help to diminish heating of the propellant tank's ullage and the inner tank wall at a diffuser, thus to reduce the direct and indirect heating of the propellant; such heating may in particular result from usually well-insulated and propellant-managed stages, and it may be counterproductive for the propulsive masses. In particular, due to its expansion in the turbine, the (expanded) tap-off gas may provide a low energy pressurant for pressurising the propellant tank. The turbine thus may be beneficial also for minimising a heating of the (preferably cryogenic) propellant within the propellant tank.

The boost pump in these embodiments thus becomes an integral part of the pressure reduction cascade of the pressurisation system of the main propellant tanks and the drive of the turbomachinery. Therein, the architecture of the piping system used by the pressure system can be used in synergy for both tasks mentioned, and hence the dry mass impact can be minimised (apart from the boost pump component itself).

A cycle type of the main engine (which serves as a basis for the pressurant flow of tap-off gas) may be an expander, a gas generator, or a stage combustion, for instance.

The propulsion system of embodiments comprising an autogenous tank pressurisation system with a turbine as mentioned above may comprise a mechanical energy transfer system coupling the turbine with the boost pump and thereby facilitating a direct power transmission (such as a torque transfer), thus providing a mechanical drive of the boost pump. In this manner, the flow of tap-off gas may serve to immediately drive the boost pump. The mechanical energy transfer system may in particular comprise at least one shaft and/or a gear unit.

Additionally or alternatively, the turbine may be configured to drive a generator the propulsion system may further comprise, the generator being configured to produce electrical energy for charging an energy storage unit. Accordingly, energy produced by the flow of tap-off gas during a boost phase may be saved for possible later use. The energy storage unit thus buffering electrical energy and possibly comprised by the propulsion system may in particular be a rechargeable battery.

According to advantageous embodiments, the boost pump of the propulsion system may be configured to be electrically driven. In particular, in respective embodiments, said energy storage unit may be configured (in particular, arranged) to drive the boost pump (which analogous to the above implicates the presence of an appropriate wiring).

In such embodiments, the boost pump not only serves to feed the main turbopump unit of the main engine with propellant under an increased outlet pressure, but also is operable - independently from whether the flow of tap-off gas is currently present, thus independently from the operation of the main engine - so as to serve as a main pump for the reaction control system. This means that the boost pump in these cases is configured as a dual boost pump. It can in particular advantageously be operated even in coasting phases (such as manoeuvring phases).

The reaction control system may be configured to operate in continuous and/or pulse mode with the dual boost pump in the boost phase and in the coasting phase.

In respective embodiments, the energy storage unit possibly comprised by the propulsion system may advantageously be configured to power the evaporator unit of the reaction control system. Thereby, means for an external energy input to the propulsion system may advantageously be further reduced or even eliminated, and a complexity, a volume, and a weight of the propulsion system may be diminished.

According to advantageous embodiments, the boost pump is positioned at an outlet of the propellant tank, in particular so as to contact the outlet. Therein, according to specific examples, the boost pump may at least partially extend into and/or protrude from the at least one propellant tank. Such vicinity allows directly delivering the saturated propellant with the boost pump and reducing thermal residuals at the propellant tank. In such embodiments, the boost pump may preferably have a superconductive design, which is particularly advantageous if the boost pump has a solenoid motor drive.

The boost pump of the propulsion system according to the present invention may be configured as an axial pump, an inducer pump, or a centrifugal pump. In these cases, provision of direct power transmission from the turbine as mentioned above is particularly advantageous.

The propulsion system may then advantageously further comprise a pre-stage propellant management device (PMD) and a bypass mass flow circuit that can be switched on and off. A recirculating mass flow may then ensure a stable reaction control system mass flow during minimal throttling operation of the axial pump. According to its design (in said case) as an axial pump, the boost pump can only be throttled in orders of magnitude of a multiple of a tenth fraction while ensuring a stable delivery pressure. This throttling is sufficient for the main engine, but the reaction control system mass flow typically is in the range of about one-hundredth of the main mass flow. A recirculating mass flow operation of the axial pump may ensure a reduction of a fraction of the nominal mass flow in which the pump itself would not be throttled while simultaneously providing stable pressure increase and conditions for the reaction control system.

According to further advantageous embodiments, the boost pump may be configured as a positive displacement pump, a negative displacement pump, or a multi-piston pump. According to specific advantageous embodiments, the boost pump may be configured as a quad-piston pump in a two-stroke design; it may then exhibit equal stroke level at each piston, or a first one of its stroke may have a stroke level which is different from a stroke level of a second one of the strokes. Such embodiments may improve a high throttle ratio of the pump at a lower throttle ratio.

The propulsion system may further comprise a pre-stage propellant management device. Therein, however, in a positive displacement pump configuration, a bypass mass flow circuit may be omitted. The boost pump can be driven mechanically or/and electrically. A solenoid pump design would be advantageous, as this pump is particularly appropriate for being designed as a superconductive design sitting at the tank outlet.

The propulsion system may then further comprise a control valve configured to supply a predetermined (appropriate) rate of liquid propellant to the evaporator unit. The evaporator unit may then only ensure that the aggregate state is converted from cryogenic liquid to gaseous.

Preferably, the boost pump (in particular when configured as a negative or positive displacement pump) may be specifically designed for operation near saturation conditions at its inlet with extended void fraction capability or in gaseous operations for reaction control operations. This may ensure the avoidance of thermal residuals within the propellant tank.

The propellant tank comprised by a propulsion system according to the present invention may in particular be a fuel propellant tank or an oxidiser propellant tank. According to advantageous embodiments, the propulsion system according to the present invention comprises both a fuel propellant tank and an oxidiser propellant tank, and a respective boost pump configured to pump the respective propellant (fuel or oxidiser) under increased outlet pressure from the respective propellant tank to the main engine and towards the reaction control system and/or towards a further reaction control system, thus feeding both a respective main turbopump unit of the engine and the/an evaporator unit of the reaction control system/ further reaction control system.

More specifically, the propulsion system's propellant tank mentioned above may be a first propellant tank and configured to contain, as said propellant, a fuel propellant. Moreover, said main turbopump unit may be a first turbopump unit, the evaporator unit may be a first evaporator unit, and the boost pump may be a first boost pump.

The propulsion system may then further comprise a second propellant tank configured to contain an oxidiser propellant, a second main turbopump unit, a second evaporator unit, and a second boost pump.

Therein, the second main turbopump unit may be configured to supply the thrust chamber of the spacecraft's main engine with oxidiser propellant from the second propellant tank, and the second evaporator unit may be configured to convert liquid oxidiser propellant originating from the second propellant tank into gaseous oxidiser propellant to be supplied to the reaction control system and/or to a further reaction control system of the spacecraft which respectively may be comprised by the propulsion system.

The second boost pump then preferably is configured to feed, at its pump side, each of the second main turbopump unit and the second evaporator unit (preferably independently from each other, in particular optionally simultaneously or successively) with oxidiser propellant from the second propellant tank.

In particular, the propulsion system may thus comprise two subsystems each of which may be provide a (sub-) propulsion system in accordance with one of the embodiments of the present invention, in particular having one or various features and/or properties described herein.

Therein, one of such subsystems may include (inter alia) a fuel propellant tank and the other one of the subsystems may include (in particular) an oxidiser propellant tank, and both subsystems may be configured to feed a common thrust chamber of a spacecraft main engine.

Such embodiments combine the respective advantages of each subsystem and thus are particularly advantageous in case the spacecraft is a chemical rocket, in particular a liquid-propellant rocket.

According to preferred embodiments, the reaction control system/s of or related to such propulsion system is/are configured as a bi-propellant reaction control system, i.e., a reaction control system configured to be driven by activating a chemical reaction of a fuel propellant with an oxidiser propellant; such bi-propellant reaction control system facilitates a gas usage which is more efficient than cold gas mono-propellant operation of the reaction control system. Indeed, in a mono-propellant operation, a tank ullage of the propellant tank may be cold due to the low energetic pressurization and to the operation of the boost pump with a turbine, and further because the evaporator power may be kept low. As a consequence, also for position control (by means of the reaction control system/s) only low-energy cold gas originating from a tank ullage or the evaporator may be available in mono-propellant operation. However, such low-energy cold gas may be adverse to a manoeuvrability of the spacecraft. By contrast, the bi-propellant reaction control system may provide for an improved manoeuvrability of the spacecraft in versatile missions and space logistics which is advantageous as compared to the mono-propellant reaction control system. The piping system of the propulsion system may then be configured to bring the oxidiser propellant and the fuel propellant together for powering the bi-propellant reaction control system/s.

A spacecraft according to the present invention comprises a propulsion system according to an embodiment of the present invention. The propulsion system may preferably at least partially be encapsulated by a hull (shell) the spacecraft may further comprise, and/or it may be configured to provide (possible in conjunction with one, two, three or more further propulsion system/s) for an intended propulsion of the spacecraft.

In what follows, preferred embodiments of the present invention are explained with respect to the accompanying drawings. As is to be understood, the various elements and properties are depicted as examples only, may be facultative and/or combined in a manner different than that depicted.

Shown is schematically in
- Fig. 1:: a portion of a propulsion system according to a first exemplary embodiment of the present invention;
- Fig. 2:: a portion of propulsion system according to a second exemplary embodiment of the present invention;
- Fig. 3:: a portion of propulsion system according to a third exemplary embodiment of the present invention;
- Fig. 4:: a propulsion system according to a fourth exemplary embodiment of the present invention;
- Fig. 5:: a propulsion system according to a fifth exemplary embodiment of the present invention; and
- Fig. 6:: a boost pump exemplarily configured as a positive displacement pump unit.

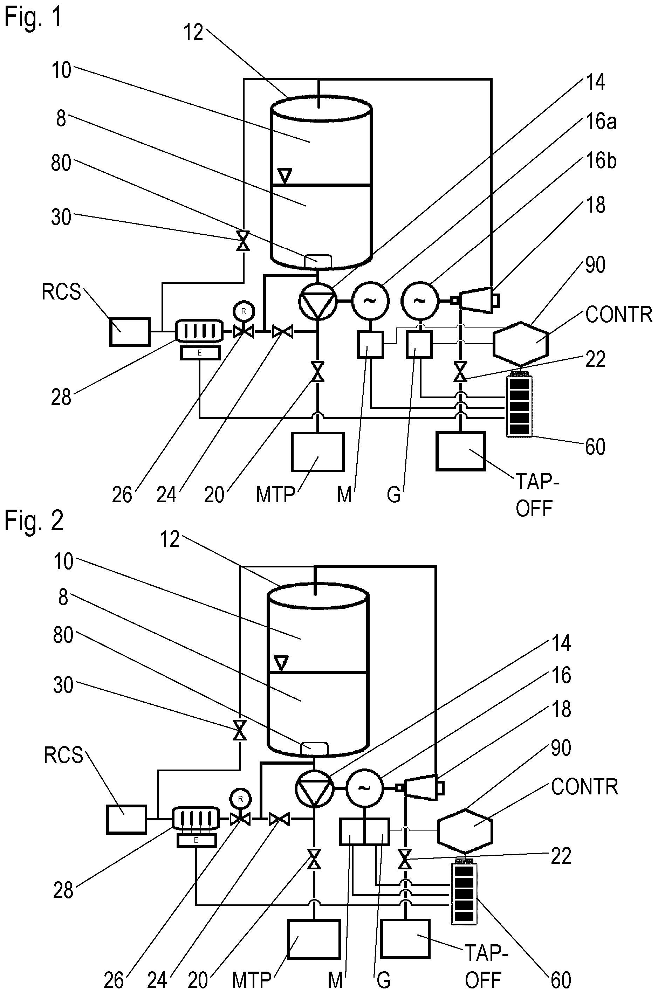

Figure 1 illustrates a first exemplary propulsion system in accordance with the present invention. The propulsion system may be included in a spacecraft or designated to be included in a spacecraft (not shown). The reference signs assigned in Figure 1 are as follows:
- 8: Propellant
- 10: Tank Ullage
- 12: Propellant Tank
- 14: Dual Boost Pump
- 16a: Boost Pump Motor
- 16b: Generator Unit
- 18: Tap-off Pressurization Turbine
- 20: Main Feedline Valve
- 22: Main Tap-off Valve
- 24: Boost Pump Main Bypass Valve
- 26: RCS Mass Flow Regulation Valve
- 28: Evaporator Unit
- 30: Tank Relief, Cold Gas Reaction and Re-pressurization Valve
- 60: Energy Storage Unit
- 80: Propellant Management Device
- 90: see CONTR
- CONTR: Energy Storage and Motor Controller Unit
- G: Generator of Generator Unit 16b
- M: Electric Motor of Boost Pump Motor 16a
- RCS: Reaction Control System
- MTP: Main Turbo Pump unit
- TAP-OFF: Autogenous Tap-off from the main engine cycle

The combination and interaction details of these components in accordance with the embodiment shown are apparent from Figure 1.

In particular, the boost pump 14 of the propulsion system partially (in particular, without the thrust chamber and the nozzle of the main engine) shown in Figure 1 is configured to feed each of a main turbopump unit MTP and the evaporator unit 28 connected to the reaction control system RCS. The boost pump 14 may in particular be an axial pump, an inducer pump, or a centrifugal pump, for example. The main turbopump unit MTP may be configured as a centrifugal pump, for instance.

The boost pump 14 is configured to be driven by a motor 16a (including electric motor M) which in this case is decoupled from the generator unit 16b.

As indicated in Figure 1 by a connection line, the motor 16a is configured to be driven with power supplied from an energy storage unit 60 (such as a rechargeable battery unit) which buffers electrical energy and which is chargeable by the generator unit 16b comprising generator G. Therein, the generator unit 16b is configured to be driven by the turbine 18 integrated in an autogenous tank pressurisation system for pressurising the propellant tank 12 with tap-off gas TAP-OFF discharged by the main engine of the spacecraft.

By being powered from the energy storage unit 60 and, thereby, independently from the operation of the main engine, the boost pump can be used even in coasting phases, i.e., when the main engine is switched off such that no tap-off gas is produced. In particular, the boost pump 14 is configured as a dual boost pump, i.e., it is configured to serve both as a boost pump for the main engine and - independently therefrom - as the main pump of the reaction control system.

Figure 2 depicts a portion (in particular, without the thrust chamber and the nozzle of the main engine) of a second exemplary propulsion system in accordance with the present invention. Therein, the reference signs are assigned as follows:
- 8: Propellant
- 10: Tank ullage
- 12: Propellant Tank
- 14: Dual Boost Pump
- 16: Boost Pump Motor / Generator Unit
- 18: Tap-off Pressurization Turbine
- 20: Main Feedline Valve
- 22: Main Tap-off Valve
- 24: Boost Pump Main Bypass Valve
- 26: RCS Mass Flow Regulation Valve
- 28: Evaporator Unit
- 30: Tank Relief, Cold Gas Reaction and Re-pressurization Valve
- 60: Energy Storage Unit
- 80: Propellant Management Device
- 90: see CONTR
- CONTR: Energy Storage and Motor Controller Unit
- G: Generator of Generator Unit 16b
- M: Electric Motor of Boost Pump Motor 16a
- RCS: Reaction Control System
- MTP: Main Turbopump Unit
- TAP-OFF: Autogenous Tap-off from the main engine cycle

The combination and interaction details of these components in accordance with the embodiment shown are apparent from Figure 2.

In particular, according to the embodiment depicted in Figure 2, the turbine 18 in this case is coupled to the boost pump 14 by a mechanical energy transfer system which may comprise at least one shaft for torque transfer and which thereby provides a mechanical drive of the boost pump 14.

The mechanical energy transfer system forms part of a coupled motor / generator unit 16 with a generator G configured to charge the energy storage unit 60 (which may be a rechargeable battery), and with an electric motor M adapted to drive the boost pump 14 when the tap-off pressurization turbine 18 is out of action, e.g. due to the main engine of the propulsion system being switched off. In particular, the boost pump 14 shown in Figure 2 is a dual boost pump.

The boost pump 14 may in particular be an axial pump, an inducer pump, or a centrifugal pump, for example. The main turbo pump MTP may be configured as a centrifugal pump, for instance.

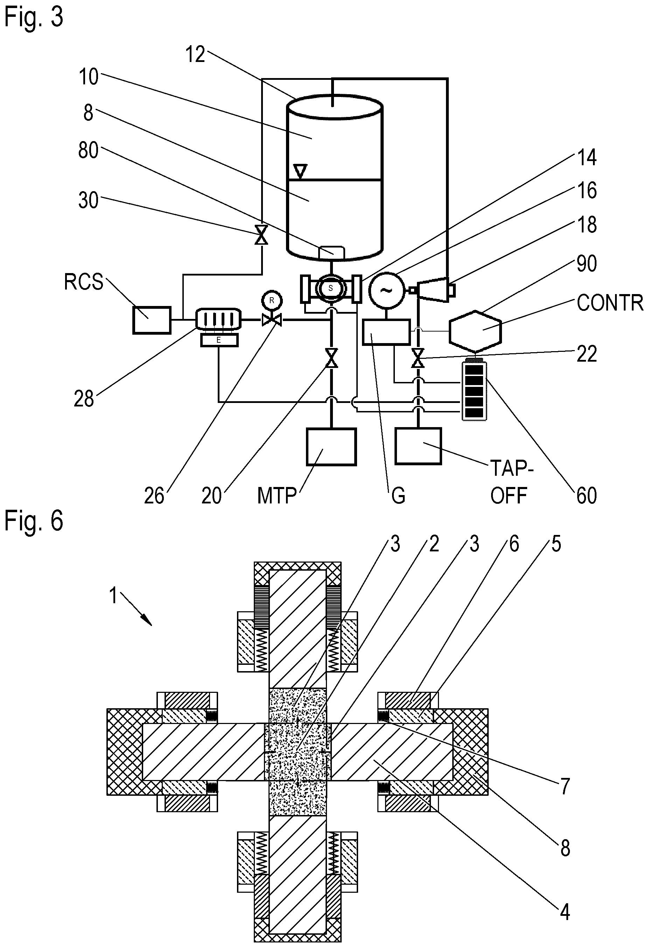

Figure 3 illustrates a further exemplary embodiment of a propulsion system according to the present invention; therein again, the thrust chamber and the nozzle of the main engine are not shown. The reference signs used in this figure are:
- 8: Propellant
- 10: Tank ullage
- 12: Propellant Tank
- 14: Dual Boost Pump
- 16: Boost Pump Generator Unit
- 18: Tap-off Pressurization Turbine
- 20: Main Feedline Valve
- 22: Main Tap-off Valve
- 24: Boost Pump Main Bypass Valve
- 26: RCS Mass Flow Regulation Valve
- 28: Evaporator Unit
- 30: Tank Relief, Cold Gas Reaction and Re-pressurization Valve
- 60: Energy Storage Unit
- 80: Propellant Management Device
- 90: see CONTR

- CONTR: Energy Storage and Motor Controller Unit
- G: Generator of Motor/Generator Unit 16
- RCS: Reaction Control System
- MTP: Main Turbopump Unit = Main Pump Unit + Main Turbine Unit
- TAP-OFF: Autogenous Tap-off from the main engine cycle

The combination and interaction details of these components in accordance with the embodiment shown are apparent from Figure 3.

In particular, boost pump 14 in this embodiment is exclusively electrically drivable. It is configured as a solenoid pump motor which is decoupled from the generator unit 16. For example, the boost pump 14 may be a positive displacement pump, or a multi-piston pump. Its solenoid pump motor is configured to be powered by the energy storage unit 60. In particular, the boost pump 14 is a dual boost pump. The energy storage unit 60 is chargeable, analogously to the embodiments shown in Figures 1, 2, by means of the turbine 18.

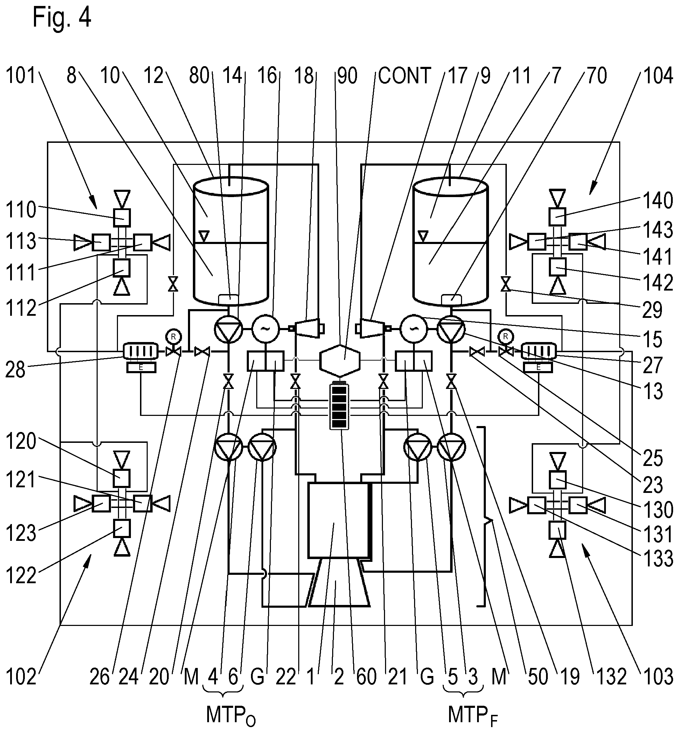

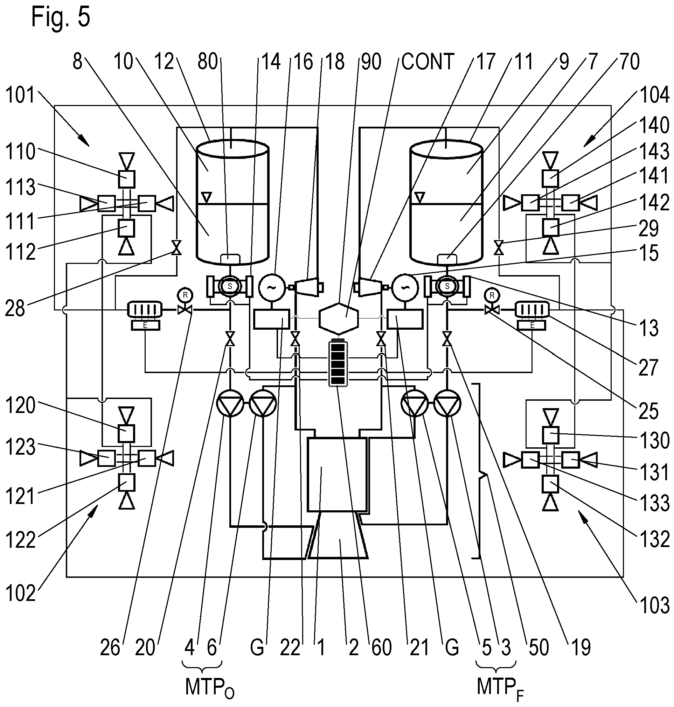

Figures 4 and 5 each show a propulsion system according to a respective embodiment which in these cases are configured as a respective dual expander engine comprising a main engine 50 (with a main thrust chamber 1, an engine nozzle 2, and a powerpack including main turbopump units MTP_{F}, MTP_{O} with main pump units 3, 4 and main turbine units 5, 6, respectively), four reaction control systems 101
- 104 each configured as a respective cluster of four thrusters 110
- 143, and both a fuel oxidiser tank 11 and an oxidiser propellant tank 12 with a respectively assigned dual boost pump 13, 14. The bi-propellant reaction control systems 101- 104 are configured to be provided with both fuel propellant 7 and oxidiser propellant 8. Therein, the boost pumps 13, 14 serve as the primary pumps for the reaction control systems 101 - 104.

In the embodiment shown in Figure 4 (analogous to the case depicted in Figure 2 for a single boost pump), the boost pumps 13, 14 both are coupled, by a respective mechanical energy transfer system forming part of a respective coupled motor/generator unit 15, 16, to a respective turbine 17, 18. The respective mechanical energy transfer system may comprise at least one shaft for torque transfer and provides a mechanical drive of the boost pumps 13, 14.

In more detail, the references used in Figure 4 are assigned as follows; the combination and interaction details of these components in accordance with the embodiment shown are apparent from Figure 4.
- 1: Main Engine Thrust Chamber
- 2: Main Engine Nozzle
- 3: Main Fuel Pump Unit
- 4: Main Oxidizer Pump Unit
- 5: Main Fuel Turbine Unit
- 6: Main Oxidizer Turbine Unit
- 7: Fuel Propellant
- 8: Oxidizer Propellant
- 9: Tank Fuel ullage
- 10: Tank Oxidizer ullage
- 11: Propellant Fuel Tank
- 12: Propellant Oxidizer Tank
- 13: Fuel Dual Boost Pump
- 14: Oxidizer Dual Boost Pump
- 15: Fuel Boost Pump Motor / Generator Unit
- 16: Oxidizer Boost Pump Motor / Generator Unit
- 17: Fuel Tap-off Pressurization Turbine
- 18: Oxidizer Tap-off Pressurization Turbine
- 19: Main Fuel Feedline Valve
- 20: Main Oxidizer Feedline Valve
- 21: Main Fuel Tap-off Valve
- 22: Main Oxidizer Tap-off Valve
- 23: Boost Pump Main Bypass Fuel Valve
- 24: Boost Pump Main Bypass Oxidizer Valve
- 25: RCS Fuel Mass Flow Regulation Valve
- 26: RCS Oxidizer Mass Flow Regulation Valve
- 27: Fuel Evaporator Unit
- 28: Oxidizer Evaporator Unit
- 29: Fuel Tank Relief, Cold Gas Reaction and Re-pressurization Valve
- 30: Oxidizer Tank Relief, Cold Gas Reaction and Re-pressurization Valve
- 50: Main Engine incl. Powerpack
- 60: Energy Storage Unit
- 70: Fuel Propellant Management Device
- 80: Oxidizer Propellant Management Device
- 90: see CONTR
- 101: Reaction Control Thruster Cluster 1
- 102: Reaction Control Thruster Cluster 2
- 103: Reaction Control Thruster Cluster 3
- 104: Reaction Control Thruster Cluster 4
- 110: Reaction Control Thruster Cluster 1- Thruster 1
- 111: Reaction Control Thruster Cluster 1- Thruster 2
- 112: Reaction Control Thruster Cluster 1- Thruster 3
- 113: Reaction Control Thruster Cluster 1- Thruster 4
- 120: Reaction Control Thruster Cluster 2- Thruster 1
- 121: Reaction Control Thruster Cluster 2- Thruster 2
- 122: Reaction Control Thruster Cluster 2- Thruster 3
- 123: Reaction Control Thruster Cluster 2- Thruster 4
- 130: Reaction Control Thruster Cluster 3- Thruster 1
- 131: Reaction Control Thruster Cluster 3- Thruster 2
- 132: Reaction Control Thruster Cluster 3- Thruster 3
- 133: Reaction Control Thruster Cluster 3- Thruster 4
- 140: Reaction Control Thruster Cluster 4- Thruster 1
- 141: Reaction Control Thruster Cluster 4- Thruster 2
- 142: Reaction Control Thruster Cluster 4- Thruster 3
- 143: Reaction Control Thruster Cluster 4- Thruster 4
- G: Generator
- M: Motor
- MTP_{F}: Main Turbo Pump formed by main fuel pump unit 3 and main fuel turbine unit 5
- MTP_{O}: Main Turbo Pump formed by main oxidizer pump unit 4 and main oxidizer turbine unit 6
- CONTR: Energy Storage and Motor Controller Unit

The boost pumps 13, 14 of the embodiment shown in Figure 4 each may be one of an axial pump, an inducer pump, or a centrifugal pump, for instance.

In Figure 5, the reference signs are assigned in the same way, apart from references 15, 16 which in this case refer to a fuel boost pump generator unit 15 and an oxidiser boost pump generator unit 16. Indeed, contrary to the propulsion system shown in Figure 4, the boost pumps 13, 14 of the embodiment depicted in Figure 5 are exclusively electrically drivable. Analogous to the case shown in Figure 3 for a single boost pump, the boost pumps 13, 14 of the propulsion system illustrated in Figure 5 both are configured as a respective solenoid pump motor which is decoupled from the generator unit 16.

The boost pump 14 of the propulsion system shown in Figure 5 may be a positive displacement pump, or a multi-piston pump, for example.

Further combination and interaction details of these components in accordance with the embodiment shown are apparent from Figure 5.

An embodiment of said positive displacement pump 1 possibly integrated, as a boost pump, in a propulsion system according to the present invention is depicted in Figure 6. The reference assigned in Figure 6 are:
- 1: Positive Displacement Pump Unit
- 2: Main Suction Cavity
- 3: Engine displacement (stroke volume or compression cavity)
- 4: Piston
- 5: Armature
- 6: Electromagnetic coil
- 7: Spring
- 8: Bushing

Combination and interaction details of these components are apparent from Figure 6. In particular, the pump unit 1 is an electrically driven pump, preferably a quad-solenoid pump motor.

Disclosed is a spacecraft propulsion system comprising a propellant tank 11, 12, a main engine 50, an evaporator unit 27, 28, and a boost pump 13, 14.

The main engine 50 comprises a thrust chamber 1, a nozzle 2, and a powerpack including a main turbopump unit MTP, MTP_{F}, MTP_{O}.

The evaporator unit 27, 28 is configured to vaporise liquid propellant 7, 8 to be supplied to a reaction control system RCS, 101, 102, 103, 104 of the spacecraft.

The boost pump 13, 14 is configured to feed both the main turbopump unit MTP, 3, 4 and the evaporator unit 27, 28 with propellant 7, 8 originating from the propellant tank 11, 12.

Preferably, the boost pump is configured to be driven with energy transmitted, directly or indirectly, from a turbine 17, 18 integrated in an autogenous tank pressurisation system.

Further disclosed is a spacecraft comprising such propulsion system.

## Claims

1. Propulsion system (100, 100', 100") for or of a spacecraft, the propulsion system comprising
- a propellant tank (11, 12),
- a main engine (50) comprising a thrust chamber (1), a nozzle (2), and a powerpack including a main turbopump unit (MTP, MTP_{F}, MTP_{O}) configured to supply the thrust chamber (1) with propellant (7, 8) from the propellant tank (11, 12),
- an evaporator unit (27, 28) configured to convert liquid propellant (7, 8) originating from the propellant tank (11, 12) into gaseous propellant to be supplied to a reaction control system (RCS, 101, 102, 103, 104) of the spacecraft; and
- a boost pump (13, 14) configured to feed each of the main turbopump unit (MTP, MTP_{F}, MTP_{O}) and the evaporator unit (27, 28) with propellant (7, 8) from the propellant tank (11, 12).

2. Propulsion system according to claim 1, further comprising an autogenous tank pressurisation system for pressurising the propellant tank (11, 12) with tap-off gas dispensed by the main engine (50), wherein the propulsion system is configured to propel a turbine (17, 18) at a drive side of the boost pump (13, 14) with energy captured from a flow of the tap-off gas.

3. Propulsion system according to claim 2, further comprising a mechanical energy transfer system which couples the turbine (17, 18) with the boost pump (13, 14) and thereby provides a mechanical drive of the boost pump (13, 14).

4. Propulsion system according to one of the claims 2 or 3, further comprising a generator (G) configured to be driven by the turbine (17, 18), and to produce electrical energy for charging an energy storage unit (60).

5. Propulsion system according to claim 4, wherein the boost pump (13, 14) is adapted to be electrically driven with power supplied by the energy storage unit (60).

6. Propulsion system according to one of the claims 4 or 5, wherein the energy storage unit (60) is configured to power the evaporator unit (27, 28) of the reaction control system (RCS, 101, 102, 103, 104).

7. Propulsion system according to one of the preceding claims, wherein the boost pump is positioned at an outlet of the propellant tank (11, 12).

8. Propulsion system according to one of the preceding claims, wherein the boost pump (13, 14) is configured as an axial pump, an inducer pump, or a centrifugal pump.

9. Propulsion system according to one of claims 1 to 7, wherein the boost pump (13, 14) is configured as a positive displacement pump, a negative displacement pump, or a multi-piston pump.

10. Propulsion system according to one of the preceding claims,
wherein the propellant tank is a first propellant tank (11) and configured to contain a fuel propellant (7), the main turbopump unit is a first turbopump unit (MTP_{F}), the evaporator unit (27) is a first evaporator unit, and the boost pump is first boost pump (13),
and wherein the propulsion system further comprises
- a second propellant tank (12) configured to contain an oxidiser propellant (8),
- a second main turbopump unit (MTP_{O}) configured to supply the thrust chamber (1) of the main engine (50) of the spacecraft with oxidiser propellant (8) from the second propellant tank (12),
- a second evaporator unit (28) configured to convert liquid oxidiser propellant (8) originating from the second propellant tank (12) into gaseous oxidiser propellant to be supplied to the reaction control system (101, 102, 103, 104) and/or to a further reaction control system (101, 102, 103, 104) of the spacecraft, and
- a second boost pump (14) configured to feed each of the second main turbopump unit (MTP_{O}) and the second evaporator unit (28) with oxidiser propellant (8) from the second propellant tank (12).

11. Spacecraft comprising a propulsion system according to one of the preceding claims.

12. Spacecraft according to claim 11, wherein the propulsion system is in accordance with claims 3 and 5 and configured to drive the boost pump (13, 14)
- by means of the mechanical energy transfer system when the spacecraft is operated in a boost phase; and
- powered by the energy storage system (60) when the spacecraft is operated in a coasting phase.
